(19)

**Europäisches Patentamt**
**European Patent Office**
**Office européen des brevets**

(11) **EP 2 882 092 A1**

(12) **EUROPEAN PATENT APPLICATION**

(43) Date of publication:
**10.06.2015 Bulletin 2015/24**

(51) Int Cl.:
*H02N 2/18* (2006.01)     *H02K 35/02* (2006.01)

(21) Application number: **13306669.6**

(22) Date of filing: **05.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Frizzell, Ronan**
**DUBLIN 15 Blanchardstown (IE)**
• **Kelly, Gerard**
**DUBLIN 15 Blanchardstown (IE)**

(74) Representative: **Shamsaei Far, Hassan**
**Alcatel-Lucent International**
**148/152 route de la Reine**
**92100 Boulogne-Billancourt (FR)**

(54) **An energy harvester**

(57)     A harvesting energy apparatus (100) is disclosed comprising a first spring (120) located inside a housing (130). The first spring has a structure that surrounds a first mass element (110) which is configured to move by an elastic movement of the first spring, due to a mechanical disturbance of the housing. The movement of the first mass element causes a first energy transducer (160) to convert the kinetic energy of the moving mass element to electric energy. The apparatus further comprises a second spring (180) located inside the first spring and a second mass element (170) also located inside the first spring. The second mass is configured to move relative to the first mass element by a second elastic movement of the second spring. The second elastic movement is caused by the mechanical disturbance of the housing and transferred to the second spring by the first spring.

FIG. 3 A

**Description**

The present disclosure relates to a technique for harvesting energy.

BACKGROUND

Vibration energy harvesting is typically the process of using vibrations from the environment to drive generators that provide power for use in electric/electronic devices. This technology has certain advantages as it is typically capable of providing power autonomy, at least to some extent, to electric systems that would otherwise have to rely solely on battery power. Battery powered systems typically require routine maintenance to replace the battery, which adds significant cost to the operator of the device. For example, in the case of wireless sensor nodes, the issue of power may become a major bottleneck to the wide deployment of large wireless sensor networks where it is typically needed that a high number of batteries be replaced routinely. Such battery replacements have cost associated with them which may hamper large-scale deployments of wireless sensor nodes that are useful for constructing the so-called "Smart" systems such as "Smart Buildings" and "Smart Cities".

SUMMARY

Some embodiments feature an apparatus comprising:

- a first spring located inside a housing;
- a second spring located inside the first spring;
- a first energy transducer located inside the housing and configured to convert kinetic energy of a moveable mass element to electric energy;
- a first mass element located at least partially inside the first spring and configured to move relative to the first energy transducer by a first elastic movement of the first spring, said elastic movement being caused by a mechanical disturbance of the housing;
- a second mass element located inside the first spring and configured to move relative to the first mass element by a second elastic movement of the second spring, said second elastic movement being caused by the mechanical disturbance of the housing and transferred to the second spring by the first spring.

According to some specific embodiments the apparatus further comprises a second energy transducer configured to convert electric energy of the second elastic movement of the second mass element into electric energy.
According to some specific embodiments the first energy transducer is located inside the first spring.
According to some specific embodiments the first mass element is located concentrically inside the first spring.
According to some specific embodiments the second mass element is located concentrically inside the first spring.
According to some specific embodiments, the first spring is a machined spring. According to some specific embodiments, the second spring is a machined spring.
According to some specific embodiments the first mass element is composed of permanent magnet and the first energy transducer is an electromagnetic coil. According to some specific embodiments the second mass element is composed of permanent magnet and the second energy transducer is an electromagnetic coil.
According to some specific embodiments, the energy transducer comprises a piezoelectric element.
According to some specific embodiments, the energy transducer comprises a magnetostrictive element.
According to some specific embodiments, the energy transducer comprises an electrostatic element.
Some embodiments feature a wireless sensor comprising the apparatus as featured herein.
These and further features and advantages of the present invention are described in more detail, for the purpose of illustration and not limitation, in the following description as well as in the claims with the aid of the accompanying drawings.

BRIEF DESCRIPTION OF THE DRAWINGS

Figure 1 is an exemplary schematic representation in cross-section of certain elements of a known energy harvester.
Figures 2A and 2B are exemplary schematic representations in cross-section of certain elements of an energy harvester wherein some principles of the disclosure are illustrated.
Figure 3A, 3B and 3C are different views of exemplary schematic representations of an energy harvester according to some embodiments.

Figure 4 is an exemplary schematic representation in cross-section of an energy harvester according to some embodiments.

DETAILED DESCRIPTION

Before the various embodiments of the disclosure are described in detail, a brief and non-limiting description of some examples of known vibration energy harvesters is provided to help a better understanding of the embodiments of the present disclosure.

Throughout the present disclosure, reference to the term "electromagnetic coil" is to be understood to refer to a length of an electrically conductive wire (typically insulated copper) which is in the form of a spiral, typically wound around a conductive core such as iron or hollow. When electricity passes through such a coil, it causes the coil to generate a magnetic field. Conversely, when a change in a magnetic field is applied to such a coil, the latter generates an electric current. Due to these properties, such coils are sometimes called electromagnets. Therefore, although from a structural stand point the coil itself is a length of a conductive wire which, without an external excitation, cannot create an electromagnetic response, the term "electromagnetic coil" is to be understood to reflect the capability of such coil to become an electromagnet when it is subjected to an excitation (e.g. an electric current or a magnetic field).

As it is known, devices that capture mechanical energy from the environment and convert it to useful form are often referred to as "energy harvesters." Some known energy harvesters are based on linear oscillator designs, which comprise a mass that is attached to the housing of the harvester via a spring. When the device is subjected to a mechanical disturbance (e.g. a vibration caused by a motor or an air conditioning system), forces are transferred from the housing to the spring and this causes the mass to undergo a displacement. Typically such displacement may be in the form of a vibration having certain amplitude and frequency. However, the source of mechanical disturbance may not always be limited to periodic vibrations and can be any source of mechanical disturbance that causes motion of the masses in the energy harvester. An example of another source of mechanical disturbance is shock loading, which is typically a more sudden and of shorter duration disturbance compared to periodic vibrations. The occurrence of a shock loading may also cause forces to be transferred from the housing to the spring and thereby a displacement of the mass(es).

The effect of the spring mass combination is that the mass oscillates out-of-phase with the housing of the energy harvester to a certain extent depending on the source of mechanical disturbance and the attributes of the spring and mass. The oscillation amplitude may damp down or it may increase depending on the effect of the external mechanical disturbance. This out-of-phase behavior is used to extract power if electro-active components are used in the device (e.g. a piezoelectric element, or a magnetically active mass in conjunction with a conducting coil within the housing).

Herein the terms motion and movement are to be understood to have the same meaning which is the act or the result of moving.

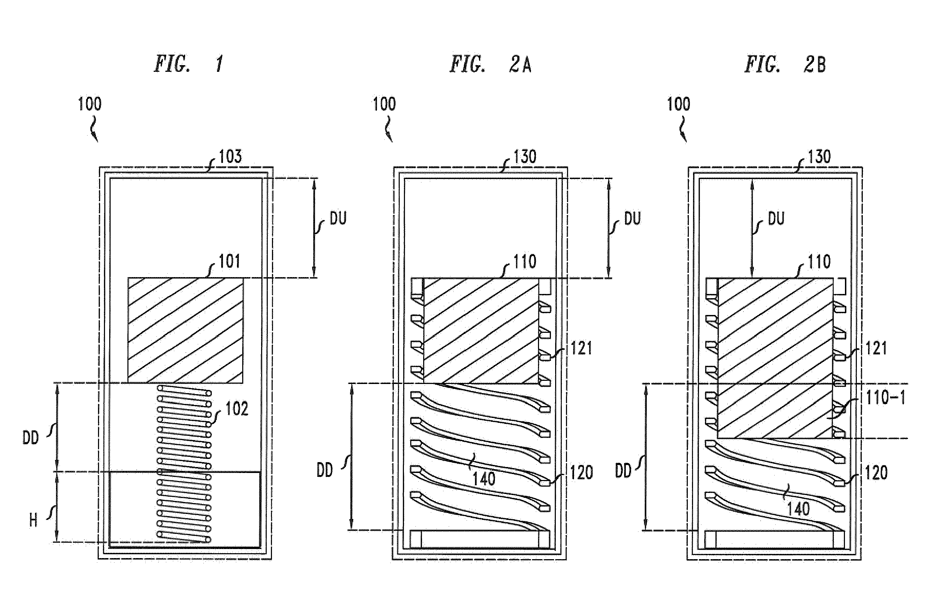

Figure 1 illustrates an example of certain elements of a known energy harvester. For the sake of briefness, only a single degree of freedom (DOF) device is contemplated. Typically a known energy harvester 100 includes a mass element 101 resiliently supported by a spring 102 thereby being capable of oscillating when the device is driven by external mechanical phenomena which cause a movement in the housing of the device, such as a vibration. The mass element and the spring are located inside a housing 103. The oscillation of the mass element 101, as a result of such mechanical disturbance, drives an energy transducer element (not shown in the figure) that converts the kinetic energy of the oscillating mass element to electrical energy to be output from the device. The mass element may be made of, or comprise, a permanent magnet material and the transducer element may be an electromagnetic coil.

However, the effectiveness of such energy harvesters is reduced by various inefficiencies related, for example, to the mechanical coupling between the external energy source and the internal mass element, and between the internal mass element and the transducer.

As a remedy to the above drawbacks, US Patent Number 8,350,394 proposes a new design for an energy harvester which can show significant improvements in the efficiency of energy conversion. According to one embodiment in this document, the energy harvester includes a first mass element, a second mass element, and optionally, one or more further mass elements. Each of the mass elements has a range of motion within the housing. The second mass element (and optionally, further mass elements) comprises a permanent magnet and is arranged to receive collisionally transferred kinetic energy from the first mass element when the housing is in an effective state of mechanical disturbance, resulting in relative motion between the housing and at least one of the second and further mass elements. The energy transducer is arranged to be activated by the resulting relative motion between the housing and at least one of the second and further mass elements, thereby generating electrical energy.

The term "collisional transfer" of kinetic energy, is to be understood to include energy transferred through any interaction between one mass element and another. Thus, energy may be "collisionally transferred" directly from one body to another, or transferred indirectly through one or more intervening bodies. Collisional transfer may involve energy transferred through direct impacts, or it may involve energy transferred through an intervening medium that behaves at least approximately as an elastic cushion. Such intervening media may include, for example and without limitation, resilient suspensions such as springs of various kinds, as well as gas cushions and magnetic fields such as are provided by magnetic bearings.

The above energy harvester further comprises highly restitutive spring elements, affixed to the bottoms of each mass element (as seen in a vertical position e.g. in figures 1, 2 and 3 of the cited patent) which act to prevent inelastic energy loss in collisions between the masses (e.g. the top mass and the bottom mass) and the housing, and between the masses themselves.

The content of the US Patent Number 8,350,394 is incorporated herein by reference, in its entirety.

The energy harvester of US Patent Number 8,350,394, therefore uses a multiple DOF approach which improves the performance, e.g. wider bandwidth response of the energy harvester and/or higher output power per unit volume, of the conventional approaches which only used a single DOF.

It is to be noted that each mass element which is added in the energy harvester adds a further DOF to the design of the energy harvester (assuming that the conditions for collisional transfer of kinetic energy relative to the first mass element, as discussed above, are met).

However known multiple DOF energy harvesters also suffer from certain drawbacks. One problem associated with the known multi-DOF approaches is that their conventional linear design, where masses are stacked one on top of the other in a linear fashion, can lead to increased volume compared to single-DOF designs. Thus, as the size of the device decreases, the springs incorporated in the device occupy a comparatively larger proportion of the device volume and it may become difficult to obtain enough space for the moving masses that is necessary for ensuring the benefits of multi-DOF energy harvesters.

The present disclosure is based on the idea of using a multiple DOF approach in the design of energy harvesters. However, the structure of the energy harvester as proposed herein incorporates at least some of the movable components internally within a spring, preferably a machined spring, resulting in substantial benefits of reduced volume and/or increased power density (ratio of electrical power produced to volume of the device), as will be described in further detail below.

Referring now to figure 2A, a cross-sectional view of certain elements of an exemplary energy harvester 100 is shown. Here again, for simplicity of description, only a single DOF arrangement is contemplated, while multi-DOF designs will be addressed further below.

The energy harvester 100 includes a mass element 110 resiliently supported by a spring 120, the spring 120 may be fixedly attached to a housing 130. The mass element 110 is capable of moving when the device is driven by external mechanical disturbance which causes a movement (such as a vibration) of the hosing 130. Such movement is then transferred from the housing 130 to the spring 120 and from the spring 120 to the mass element 110. The movement of the mass element 110, as a result of such mechanical disturbance, drives an energy transducer element (not shown in the figure) that converts the kinetic energy of the oscillating mass element 110 to electrical energy to be output from the energy harvester 100.

The mass element may be made of, or comprise, a permanent magnet material and the transducer element may be an electromagnetic coil.

However differently from the known arrangements in which the mass elements are stacked above or under the springs, the energy harvester 100 of the present disclosure incorporates at least some of the moveable elements, e.g. one or more mass elements, inside the spring 120. This is clearly shown in figure 2A where the mass element 110 is located substantially inside a spring 120 and the assembly is located inside a housing 130.

A comparison between the energy harvester of figure 2A and that of figure 1 illustrates some of the benefits of using the structure as proposed herein. Although the figures are not intended to represent scale and size, the devices of figures 1 and 2A are provided in similar dimensions to facilitate comparison.

It is to be noted that reference to directions of motions such as "vertical", "downward", "upward" and the like are provided throughout this description for simplifying the understanding of the embodiments disclosed and are to be assessed with due regard to the figures. These directions however, are exemplary and are not to be construed in a limiting fashion. Those of ordinary skill in the related art will understand that the energy harvester may be placed to operate at any suitable position or angle (for example with respect to the direction of gravity) according to the requirements of each specific application.

In figure 1, where the spring 102 is located under the mass element 101, the mass element 101 may undergo a vertical downward displacement (toward the bottom of the housing 103) thereby compressing the spring 102. This downward displacement is limited in length by the height of the spring 102 when it is completely compressed. In figure 1, the vertical displacement of the mass element 101 is represented by solid double-headed arrow $D_D$ and the height of the spring in its fully-compressed state is represented by double-headed arrow H (which does not represent displacement). Therefore the space within the housing corresponding to the height H is not usable in the structure of this known energy harvester. The mass element 101 may also have the possibility of undergoing an upward displacement within the housing as shown by solid double-headed arrow $D_U$.

On the other hand, the energy harvester of figure 2A provides a structure in which the mass element 110 is located inside the spring 120. In this structure, the mass element 110 may undergo a vertical downward displacement (toward the bottom of the housing 130) thereby compressing the spring 120. In figure 2A, the vertical displacement of the mass element 110 is represented by solid double-headed arrow $D_D$ and the height of the spring in its fully-compressed state is represented by double-headed arrow H (which does not represent displacement). The mass element 110 may also have the possibility of undergoing an upward displacement within the housing 130 as shown by solid double-headed arrow $D_U$.

However, contrary to the structure of the energy harvester of figure 1, the downward displacement of the mass element 110 is not limited in length, as much as the mass element of a known device such as that of figure 1 may be, as there is no spring located in the displacement space 140. Although the spring 120 undergoes compression as a result of the downward displacement of the mass element 110, such compression occurs throughout the helical body 121 of the spring 120 which surrounds the mass element 110 and thus it does not block the displacement space 140 which is available for the movement of the mass element 110.

As it can be clearly seen from a comparison between figures 1 and 2A, the displacement distant of the energy harvester of figure 2A is significantly larger than the displacement distance of the energy harvester of figure 1. This results in an improvement in the usage of displacement space provided by the embodiment of the figure 2A.

Figure 2B shows a cross-sectional view of certain elements of another exemplary energy harvester 100. The energy harvester 100 includes a mass element 110 resiliently supported by a spring 120, the spring 120 may be fixedly attached to a housing 130. The mass element 110 is capable of moving when the device is driven by external mechanical disturbance which causes a movement (such as vibration) in the housing 130. As a result, kinetic energy of the moving mass element may be converted to electrical energy to be output from the energy harvester 100.

The energy harvester of figure 2B is in many aspects similar to the that of figure 2A with the difference that in the device of figure 2B, the additional space (as compared to the known energy harvester of figure 1) available due to the absence of a spring located within the displacement space 140, or at least a part of such additional space, is used for incorporating additional mass 110-1 into mass element 110.

As it can be clearly seen from a comparison between figures 1 and 2B, the mass element 110 (including the additional mass 110-1) of the energy harvester of figure 2B is larger than the mass element 101 of the energy harvester of figure 1. This results in an improvement in the amount of mass used by the embodiment of the figure 2B.

The improvement in the usage of displacement space and the improvement in the usage of mass in the energy harvesters of figures 2A and 2B respectively are advantageous because these parameters are important design features which may impact the power output of the energy harvester. Indeed, both the mass and the amount of displacement the mass element can undergo directly affect the amount of electrical power that an energy harvester can return from a given source of mechanical disturbance (e.g. vibration). The following equation, describing the theoretical maximum power from an ideal energy harvester, illustrates this conclusion.

$$P_{max} = \frac{2}{\pi} Y_0 \, Z_l \omega^3 m \qquad\qquad (1)$$

Where $Y_0$ and $\omega$ are the amplitude and frequency of the input vibration. $Z_l$ and m respectively represent the available internal displacement and the value of the inertial mass of the generator. As used herein, the inertial mass is to be understood to refer to a mass that contributes to the conversion of kinetic energy to electrical energy. Such contribution may be achieved by using a single mass, or multiple masses acting in combination. Therefore, for a single-degree-of-freedom harvester, the inertial mass is the total moving mass inside the harvester that is excited by the mechanical disturbance (e.g. mass 101 in figure 1); whereas for a multiple-mass harvester the inertial mass is the sum of the multiple masses m1. Equation (1) shows that the maximum power ($P_{max}$) is directly proportional to the internal displacement range and the movable mass inside the device.

The use of a spring which surrounds at least some of the internal components of the device according to the present disclosure therefore provides the possibility of improving the power output of an energy harvester by using either a comparatively larger displacement distance for the mass element, a comparatively larger mass element, an increased number of masses or a combination of these parameters (comparison being made with a known energy harvester as in the example of figure 1).

It is to be noted however that equation (1) shows the total amount of inertial energy (expressed in the equation in terms of power) that a given mass can accumulate in response to a given input mechanical disturbance. However, the amount of the energy that is actually converted to electric energy and made available at the output of the energy harvester is dependent upon the effectiveness of the transducer and is affected by the losses that are caused by mechanical/electrical coupling. In the US Patent Number 8,350,394, it is shown that a multi-mass arrangement can cause the moving masses to reach high velocities. Higher velocities may contribute to the effectiveness of the energy conversion as they may improve the response of the transducer. Therefore, although the maximum power generated by a given amount of displacement of a given mass in an ideal energy harvester is expressed in equation (1), the amount of the energy effectively converted by the transducer, and therefore the amount of the overall maximum power produced by the harvester, may also depend on the velocity of displacement of the mass. This effect may give rise to additional advantages, as explained in the non-limiting example provided below.

In this example, a multi-mass (i.e. a multiple DOF) harvester is assumed be in a vertical upright position and to comprise a series of masses where the largest mass is positioned inside and closest to the bottom of the vertical housing.

In this particular example, the terms large and small are to be understood to refer to the weight of the masses, such that a large mass is heavier than a small mass when gravity is present. Those of skill in the related art will understand that in other applications, such as in space where gravity is not present or is negligible, the terms large and small may be dependent upon other factors such as size, density (mass per unit volume) and the like.

A second largest mass is positioned above the largest mass so that collisions can occur between these two masses and momentum is transferred from the largest mass to the next largest mass, which results in a higher velocity of the second mass compared to the first mass. Further masses of decreasing size can be arranged in a series such that, as a result of a mechanical disturbance, the momentum is transferred from one mass in the chain of masses to the next. This transfer of momentum has the effect of increasing the velocity of the smallest mass in the chain. In this non-limiting example, a magnet can be attached to the smallest mass (in weight) and a current conducting coil can be placed close to this smallest mass.

In operation, the above exemplary setup ensures electric current, $i$, to be induced in the coil when the masses undergo displacement and this current can be harvested for useful purposes. In principle, all masses could magnetically contribute to the conversion process, but for the sake of simplicity of this exemplary illustration those additional magnetic contributions are ignored in the present discussion. The magnitude of Faraday's induced electromotive force is given by the formula $V_{emf} = Blv$, where B represents the magnetic flux density experienced by the coil of total length $l$, and $v$ is the relative velocity between magnet and coil. The electric power delivered to a resistive load, $R_L$, attached to the current conducting coil is given by $P_e = Bli \times v$, where $Bli$ is the induced magnetic force on the coil. As the current, $i$, is proportional to the velocity, the harvested power is proportional to the velocity raised to the second power (i.e. velocity squared):

$$P_e \sim v^2 \qquad\qquad (2)$$

where $P_e$ is the effective power delivered to the load at the output of the energy harvester.

The impacts occurring in the multi-mass vibration energy harvester are known to cause a velocity amplification effect and since $P_e \sim v^2$ there are therefore considerable benefits to amplifying the velocity of the masses in the multi-mass vibration energy harvester arrangement. In addition, it can be shown that for a series of n-masses of progressively smaller mass that impact sequentially, the velocity gain is proportional to number of masses in the chain, $n$. This is represented by the following equation:

$$G_n = (1 + e_{1,0}) \prod_{k=2}^{n} \left( \frac{1 + e_{k,k-1}}{1 + r_{k,k-1}} \right) - 1 \qquad (3)$$

where $G_n$ is the velocity gain of the $n^{th}$ mass, $e_{j,i}$ is the coefficient of restitution between masses $j$ and $i$ and $r_{k,k-1}$ is the mass ratio between two adjacent masses.

Since the velocity gain can be controlled by the number of masses and the power is proportional to the velocity squared, there are significant performance benefits that can be achieved with the design proposed herein. This is because the present solution enables a higher number of masses to be included in the chain of colliding masses, as compared to known solutions due to the additional space which is made available for mass displacement or for higher number of masses, as previously described.

Another important advantage that may be considered in relation to equation (3) is the available mass ratio, $r_{k,k-1}$, of adjacent masses. As previously described, the harvester as proposed herein enables the use of a larger mass, as compared to known harvesters, which can act as a larger first mass in the chain of masses thus allowing a higher mass ratio to be achieved between first and subsequent masses. This increases the velocity gain (according to equation (3)) and increases the power returned by the device (according to equation (2)). Preferably, the spring 120 (in both examples of figures 2A and 2B) may be a machined spring. Machined springs are known. Briefly, these springs have end sections which are solid (substantially non-flexible) and form the ends of the elastic section (flexure) which is the deforming section identified by the slots of the spring. The use of machined spring is advantageous over the choice of wired springs as the solid ends help achieve a balanced bending momentum, thereby facilitating a smooth linear deflection. These springs also show better resistance to twisting, lower energy loss and longer lifetime as compared to wired springs. For the sake of clarity it is to be noted that in some practical implementations, such as the one shown in the example of figures 2A and 2B, the mass element 110 may not be completely located inside the spring 120. For example in figures 2A and 2B, the upper part of the mass element 110 is shown to be resting on the upper end of the spring 120 and therefore such upper part may be considered as not being located inside said spring. However, as it is clear from these figures, a major part of the mass element 110 is in fact housed inside the spring 120. In this regard it is emphasized that the present disclosure also encompasses the situations in which the mass element is partially located inside the spring as such arrangement also contributes to improving the usage of space for the displacement of the mass element and/or to the possibility of using a larger (heavier) mass element as discussed above.

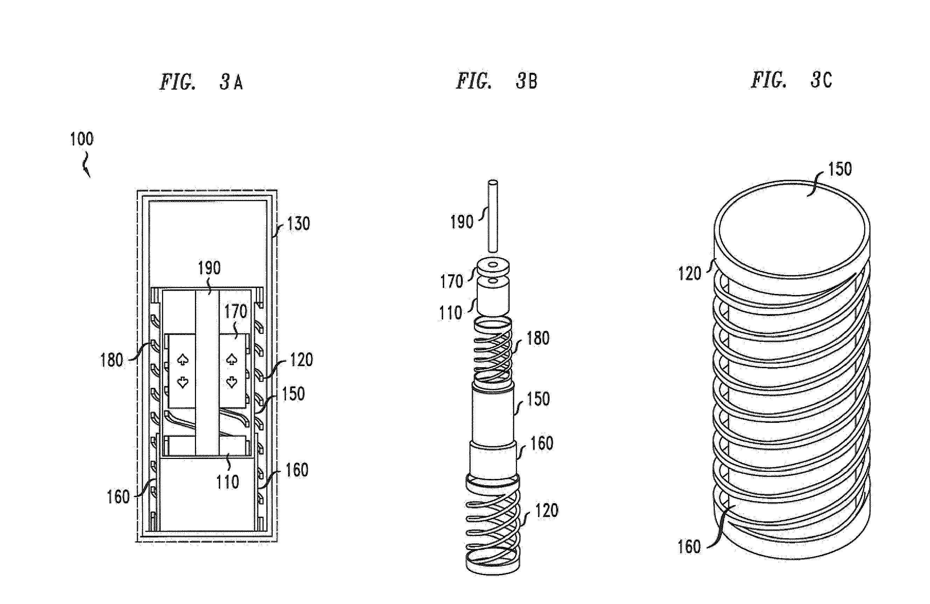

As mentioned above, embodiments of the disclosure feature the use of a multiple DOF approach in the structure of an energy harvester. Figures 3A, 3B and 3C are different views of exemplary schematic representations of an energy harvester in which a multiple DOF arrangement is used with a spring-mass element combination in which at least one mass element is movable inside the structure of a spring in a similar fashion as described in relation to figures 2A, and 2B. However, for simplicity of illustration, figures 3B and 3C do not show the outer housing of the device. Figure 3A however shows the outer housing. In figures 3A, 3B and 3C, like elements have been given like reference numerals as those of figures 2A and 2B.

Referring to figure 3A a cross-sectional view of an exemplary energy harvester 100 is shown. It is to be noted that for the sake of clarity and briefness, only the elements that are considered to be relevant for the understanding of the present disclosure have been shown in the figure. The energy harvester 100 includes a first spring 120, the first spring 120 may be fixedly attached to an outer housing 130. The first spring 120 resiliently supports an inner housing 150 which is capable of moving when the device is driven by external mechanical disturbance which causes a movement (such as vibration) in the outer hosing 130. The inner housing 150 is located inside the structure of the first spring 120.

A first energy transducer element 160 is also located inside the first spring 120. The first energy transducer element 160 is configured to convert kinetic energy into electric energy as will be described in further detail below.

Located inside the inner housing 150 there are a first mass element 110 and a second mass element 170. The first mass element 110 may be fixedly attached to the inner housing 150 and moveable relative to the first transducer. The second mass element 170 may be movable relative to the inner housing 150, and therefore relative to first mass element 110.

A second spring 180 is also located inside the inner housing 150. The second spring 180 may be fixedly attached to the inner housing 150 and configured to resiliently support the second mass element 170.

The second mass element 170 is configured to move relative to the first mass element 110, in response to a mechanical disturbance, due to the flexibility provided by the second spring 180. The second mass element 170 is configured to move relative to a second energy transducer 190 thereby inducing energy in the latter. Furthermore, the second mass element 170 is also moveable relative to the first energy transducer 160, thereby also inducing energy in the first energy transducer if the two elements are positioned close enough relative to each other to enable such induction.

In some embodiments the inner housing 150 and the first spring 120 have cylindrical shapes with respective circular cross-sections and the first mass element 110 and the second mass element are each concentrically located inside the first spring 120.

Figure 3B illustrates an exploded schematic view of the energy harvester of figure 3A and figure 3C illustrates the energy harvester of figure 3B in assembled situation. As mentioned above, the housing of the energy harvester is not shown in figures 3B and 3C for the sake of simplicity of illustration. It is emphasized that figures 3A, 3B and 3C are not provided in scales or size and therefore possible differences in the size of corresponding elements in these figures are not to be construed in a limiting manner. In figures 3B and 3C like elements have been given like reference numerals as those of figure 3A.

In the example of figures 3B and 3C inductive coils have been used as energy transducers and the mass elements are wholly or partly composed of permanent magnets.

As can be clearly observed from figure 3B (and to some extent figure 3C), the energy harvester 100 includes a first spring 120 configured to resiliently support an inner housing 150 which is capable of moving when the device is driven by external mechanical disturbance. The inner housing 150 is located inside the structure of the first spring 120.

An inductive coil 160 is also located inside the first spring 120.

Located inside the inner housing 150 there are a first mass element (magnet) 110 and a second spring 180 which is configured to resiliently support a second mass element (magnet) 170 which may be located inside the second spring 180. The first magnet 110 may be fixedly attached to the inner housing 150 and second magnet 170 may be movable relative to the inner housing 150. Furthermore, the second magnet 170 is configured to move relative to a second inductive coil 190 which is also located inside the inner housing 150.

In the example of figures 3A, 3B and 3C the second inductive coil may also act as a displacement axis for the moveable bodies.

In some embodiments the inner housing 150 and the first spring 120 have cylindrical shapes with circular respective cross-sections and the first mass element 110 and the second mass element are each concentrically located inside the first spring 120. For example in the embodiment of figures 3A and 3B the first spring 120, the first inductive coil 160, the inner housing 150, the first magnet 110, the second magnet 170, the second spring 180 and the second inductive coil 190 are all disposed in a concentric orientation around the displacement axis represented by the second coil 190.

With this arrangement, the operation of the energy harvester 100 of figures 3A, 3B and 3C is as follows.

When the energy harvester 100 is subjected to a mechanical disturbance (caused by a phenomenon external to the energy harvester), such disturbance is transferred from the outer housing 130 to the first spring 120. As a result the first spring 120 causes the first magnet 110 to undergo a displacement. The effect of the spring-magnet combination may cause the magnet 110 to oscillate out-of-phase with respect to the outer housing 130 and thereby induce electric energy in the first inductive coil 160 according to known laws of electromagnetic induction. This energy may then be output from the first inductive coil for use as desired.

Additionally, the movement of the first spring 120 is transferred to the inner housing 150 which is in turn transferred to the second spring 180. As the second spring 180 resiliently supports the second magnet 170, the movement of the second spring 180 causes the second magnet 170 to move. Such displacement may be in the form of an oscillation (which may damp down, stay constant or increase over time). As the first magnet 110 is attached to the inner housing 150, the relative movement of the second magnet 170 relative to the inner housing 150 is also relative to the first magnet 110. This latter relative movement gives rise to a collisional transfer of kinetic energy from the first magnet to the second magnet. Because coil 190 is also fixed relative to the inner housing 150, the relative motion between the second magnet 170 and the inner housing 150 is equivalent to the relative motion between the second magnet 170 and the second coil 190. This relative motion causes a second output voltage to be induced in a similar fashion as explained above with respect to the first magnet 110 and the first inductive coil 160, and causes additional output electrical power to be generated.

As an additional measure for improvement, the magnets 110 and 170 may be arranged with like-poles facing each other in order to promote enhanced mass deflection and further power increase.

Although the above example of an embodiment has been provided with respect to the use of magnets and coils, those of skill in the related art will realize that other transducers, as identified further below, may likewise be used within the scope of the present disclosure.

As mentioned above, the use of machined springs for the first spring, the second spring or for both is preferred. For example a so-called Triple start spring may be used. This kind of spring typically comprises three separate springs intertwined that have start positions at 120° from each other. When this machined spring is compressed, the bending moments that occur in each of the intertwined springs are balanced by the other intertwined springs, which facilitate a smooth linear deflection. The machined spring may therefore eliminate or reduce the shortcomings associated with the motion of conventional wire-wound coil springs that often tend to bend and twist when they are compressed, which leads to losses that reduce the efficiency of energy transducer.

Machined springs further afford increased design flexibility through the inclusion of attachment points for the internal components of the energy harvester which improves device robustness. Such design flexibility is not possible or difficult to achieve using wire-wound coil springs. Machined springs can also be designed in unique ways to ensure a force balance and negate undesirable effects such as bending moments and residual stresses associated with standard wire-wound coil springs. This ensures that losses in the machine springs are less than in wire-wound coil springs, which may provide higher electrical power output and improved lifetime, both of which being important when robustness is desired in the device.

The embodiment of figures 3A, 3B and 3C may be modified to accommodate alternative magnet/coil arrangements.

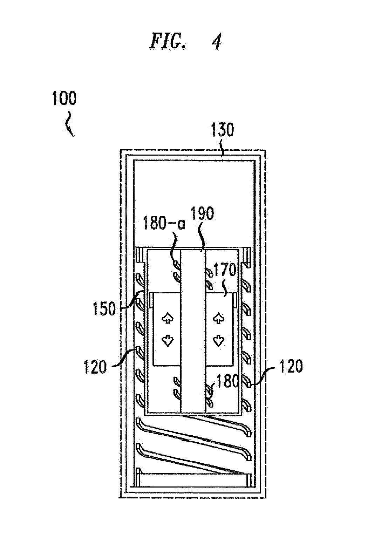

For example, in some embodiments (not shown in the figures) the second coil 190 may be fixed to the base of the outer housing 130 (as opposed to being fixed to the inner housing) and thus move with the outer housing as the latter is driven by an external mechanical disturbance. In this example, the second coil would still extend axially inside the inner housing 150 and the second magnet 170. However the second coil 190 is not fixedly attached to the second housing 150 thereby allowing free movement of the second housing 150 in response to the movement of the first housing 130 transferred thereto by the first spring 120. According to another example, the second spring may be a wire-wound coil spring, instead of a machined spring. Figure 4 is a schematic representation of such exemplary embodiment. In figure 4, like elements have been given like reference numerals as those of figures 3A, 3B and 3C.

The energy harvester 100 of figure 4 includes a first spring 120 configured to resiliently support an inner housing 150 which is capable of moving when the device is driven by external mechanical disturbance which causes a movement (such as vibration). The inner housing 150 is located inside the structure of the first spring 120. An inductive coil 160 is also located inside the first spring 120. The energy harvester 180 further comprises a mass element (magnet) 170, a second spring 180 and a second inductive coil 190.

Although in the embodiment of Figure 4 only one mass element (element 170) has been shown, for the purpose of the present discussion, the energy harvester is considered to comprise two masses. In this regard, the first machined spring 120, the inner housing 150 and the second inductive coil 190 constitute, in combination (or in total), the first mass element; and the second magnet 170 constitutes the second mass element. In this case, impact then occurs when the second mass element 170 strikes the coiled springs 180 (and possibly 180-a), which transfers the momentum from the first mass element to the second mass element 170.

However differently from the example of figures 3A, 3B and 3C, the second magnet 170 is located outside the second spring 180 (above the second spring in the example of figure 4). The second spring 180 is configured to resiliently support the second mass 170 and mediate impacts between the inner housing 150 and the second mass 170. The second mass 170 is movable relative to the inner housing 150. Furthermore, the second magnet 170 is configured to move relative to a second inductive coil 190 which is also located inside the inner housing 150. A further spring 180-a may also be located outside the second magnet 170 and opposite to the side where the second spring 180 is located and may be used for absorbing possible impacts of the second magnet 170 with the inner housing 150 when the device is in operation. The principles of operation of the energy harvester of figure 4 are similar to those of the example of figures 3A, 3B and 3C.

In alternative example of embodiments, the first inductive coil may be located outside the first spring, but inside the outer housing. In such case, the first inductive coil may circumferentially surround a part of the volume of the first spring. Should this be the case, care may be taken that the height of the inductive coil does not obstruct the free compression/expansion movement of the first spring sufficient for the operation of the energy harvester.

As mentioned above, various types of transducers may be used in the energy harvester of the present disclosure. A non-exhaustive list of such transducers includes electromagnetic energy conversion, piezoelectric materials, magnetostrictive elements and electrostatic devices. Electromagnetic energy harvesting, as disclosed in various embodiments herein, involves creating relative motion between magnetic components and a current carrying inductor or similar device. According to known laws of electromagnetic induction this will cause an electrical current to flow in the current carrying components, which can be harvested for useful purposes. Piezoelectric transducers produce an electrical response under the influence of mechanical strain. Piezoelectric transducers may be employed in the harvester of the present disclosure such that they may undergo mechanical strain due to the motion of the springs and/or masses and therefore produce an electric charge that can be harvested for useful purposes. Magnetostrictive materials take advantage of the Villari effect where the magnetic field of certain materials changes when exposed to mechanical stress. Magnetostrictive materials can also be used to undergo mechanical deformation in the presence of changing magnetic fields. These materials can be used in proximity to a current carrying coil or device with similar functionality and any changes in the magnetic field of the material will cause current to be induced in the coil, which can be harvested. Magnetostrictive materials may be installed in the harvester of the present disclosure such that they undergo strain as a direct result of the motion of the spring and/or mass thus creating electric current that can be harvested for useful purposes. Electrostatic transducers use the principle of a variable capacitor where the relative motion of the charge storing plates of the capacitor causes an electrical current to flow in an attached electrical load. Electrostatic vibration energy harvesters use moving masses to create the motion of the capacitor plates and such an approach could potentially be implemented using the principles of the present disclosure.

Although the above examples of embodiments have been provided in relation to an energy harvester having double DOF (i.e. two pairs of mass/spring assembly) the invention is not so limited and energy harvesters according to the present disclosure may be constructed with any suitable number of DOF without departing from the scope of the claims of the present disclosure.

In the various embodiments of the present disclosure, the housing may be evacuated to reduce air resistance.

Energy harvesters constructed according to the various embodiments of the present disclosure offer a number of important advantages. Some of such advantages are summarized below.

- The possibility of incorporating the internal components of the multi-dof device inside a spring mechanism provides additional frees space within the device (as compared to known devices) which may allow for more movement of the internal components, an increased number of masses for increased velocity gain or for larger masses to be incorporated, both of which give rise to higher output power from the device.
- The use of a machined spring may allow for specially designed attachment points to be incorporated into the design. Such attachment point may be desirable when complex internal components need to be incorporated that are necessary in the design of a multi-DOF energy harvester.
- Since each of the internal masses requires a spring to mediate impacts and/or transfer energy from one mass to others within the design the provision of a machined spring specially designed to surround the internal masses and springs is beneficial to efficiently use the available space within the device and thereby optimize its size.

The material and heat treatment of the various spring(s) may be chosen to ensure that the most favorable motion of the masses is achieved to maximize the harvested energy from the device and optimize the overall weight thereof.

The various embodiments of the present invention may be combined as long as such combination is compatible and/or complimentary.

Further it is to be noted that the list of structures corresponding to the claimed means is not exhaustive and that one skilled in the art understands that equivalent structures can be substituted for the recited structure without departing from the scope of the invention.

It should be appreciated by those skilled in the art that any block diagrams herein represent conceptual views of illustrative circuitry embodying the principles of the invention.

**Claims**

1. An apparatus comprising:

   - a first spring located inside a housing;
   - a second spring located inside the first spring;
   - a first energy transducer located inside the housing and configured to convert kinetic energy of a moveable mass element to electric energy;
   - a first mass element located, at least partially inside the first spring and configured to move relative to the first energy transducer by a first elastic movement of the first spring, said elastic movement being caused by a mechanical disturbance of the housing;
   - a second mass element located inside the first spring and configured to move relative to the first mass element by a second elastic movement of the second spring, said second elastic movement being caused by the mechanical disturbance of the housing and transferred to the second spring by the first spring.

2. The apparatus of claim 1, further comprising a second energy transducer configured to convert electric energy of the second elastic movement of the second mass element into electric energy.

3. The apparatus of any one of the preceding claims, wherein the first energy transducer is located inside the first spring.

4. The apparatus of any one of the preceding claims, wherein the first mass element is located concentrically inside the first spring.

5. The apparatus of any one of the preceding claims, wherein the second mass element is located concentrically inside the first spring.

6. The apparatus of any one of the preceding claims, wherein the first spring is a machined spring.

7. The apparatus of any one of the preceding claims, wherein the second spring is a machined spring.

8. The apparatus of any one of the preceding claims 1 to 6, wherein the second spring is a wire-wound coil spring.

9. The apparatus of any one of the preceding claims, wherein the first mass element is composed of permanent magnet and the first energy transducer is an electromagnetic coil.

10. The apparatus of any one of the preceding claims, wherein the second mass element is composed of permanent magnet and the second energy transducer is an electromagnetic coil.

11. The apparatus of any one of the claims 1 to 9, wherein the first energy transducer or the second energy transducer comprises a piezoelectric element.

12. The apparatus of any one of the claims 1 to 9, wherein the first energy transducer or the second energy transducer comprises a magnetostrictive element.

13. The apparatus of any one of the claims 1 to 9, wherein the first energy transducer or the second energy transducer comprises an electrostatic element.

**14.** A wireless sensor comprising the apparatus of any one of claims 1 to 13.

FIG. 1

FIG. 2A

FIG. 2B

*FIG. 3A*

*FIG. 3B*

*FIG. 3C*

EP 2 882 092 A1

FIG. 4

Europäisches
Patentamt

European
Patent Office

Office européen
des brevets

# EUROPEAN SEARCH REPORT

Application Number

EP 13 30 6669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/085093 A2 (TREMONT ELECTRIC LLC; LEMIEUX AARON PATRICK TREMONT ELECTRIC INC [US];) 14 July 2011 (2011-07-14) <br> * page 2, lines 7-28 * <br> * page 8, line 27 - page 10, line 10 * <br> * page 14, line 22 - page 15, line 27; figure 1 * | 1-14 | INV. <br> H02N2/18 <br> H02K35/02 |
| A | DE 100 55 846 A1 (OTTE ERHARD [DE]) 29 May 2002 (2002-05-29) <br> * paragraphs [0041] - [0047]; figures 5,6 * | 1 | |
| A | US 2009/051229 A1 (SHAU ALBERT [US]) 26 February 2009 (2009-02-26) <br> * paragraph [0021]; figure 1 * | 1 | |
| | | | TECHNICAL FIELDS SEARCHED (IPC) <br><br> H02N <br> H02K |

The present search report has been drawn up for all claims

| Place of search | Date of completion of the search | Examiner |
|---|---|---|
| Munich | 9 April 2014 | Steiner, Markus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 30 6669

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2014

| Patent document cited in search report | | Publication date | Patent family member(s) | | Publication date |
|---|---|---|---|---|---|
| WO 2011085093 | A2 | 14-07-2011 | US | 2011193428 A1 | 11-08-2011 |
| | | | WO | 2011085093 A2 | 14-07-2011 |
| DE 10055846 | A1 | 29-05-2002 | NONE | | |
| US 2009051229 | A1 | 26-02-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8350394 B